# EUROPEAN PATENT APPLICATION

(11) **EP 3 736 386 A1**
(43) Date of publication of application: **11.11.2020**
(21) Application number: 19173185.0
(22) Date of filing: 07.05.2019
(51) Int. Cl.: E03C 1/04, E03C 1/05, F16K 17/24, F16K 17/34, F16K 31/56

(54) **VALVE FOR DUAL FAUCET AND FAUCET COMPRISING THE VALVE**

(71) Applicant: FM Mattsson Mora Group Danmark ApS, 5240 Odense NØ (DK)
(72) Inventor: Rantzau, Claus, 5210 Odense NV (DK)
(74) Representative: Chas. Hude A/S

(57) **Abstract**

The invention relates to a household-type water control valve and faucets with such valve. The valve (150) is suitable for household-type use for providing water according to two different user controls, e.g a manual control and a sensor control, the valve (150) having:
- a valve chamber (154) with a first opening (151), an override opening (152), and a valve outlet opening (153),
- a valve insert (160) being movable between a relaxed position (X) and an override position (Y) in said valve chamber (154), where
- in said relaxed position (X), the valve piston (160) engages with said valve chamber (154) to form a primary liquid pathway (B) between said first opening (151) and said valve outlet opening (153), and
- in said override position (Y), the valve piston (160) engages with said valve chamber (154) to form an override liquid pathway (C) between said override opening (152) and said valve outlet opening (153) while blocking said primary liquid pathway (B), wherein

- said valve insert(160) is adapted to be movable from said relaxed position (X) to said override position (Y) by pressurised liquid flowing through said override opening (152).

## Description

### FIELD OF THE INVENTION

The invention relates to a household-type water control valve and faucets with such valve.

### BACKGROUND OF THE INVENTION

Restrooms and kitchens are supplied with sinks and faucets. In public restrooms, there is an increased focus on cheap and effective sanitation and therefore automatic non-touch faucets are becoming more prevalent.

In private homes, there is also a desire for automatic faucets. One reason is to serve the elderly and children who may not have the dexterity to control a manual faucet with precision. Another reason is to allow washing hands during cooking without smearing the faucet in wet flour, chicken juice or other unsanitary or impractical cooking substance. However, it may also be desirable to have a faucet with manual control. If a user wishes to drink a glass of cold water from the faucet and the setting for the automatic faucet is adjusted to a hand-washing temperature, it is inconvenient and even counter to the purpose of the automatic function of the faucet if the user has to touch the faucet to adjust the water temperature. A user can then install two faucets at the sink - one manual and one automatic.

Dual faucets have been developed to comprise two water systems with one common water-dispensing outlet. These systems can ideally output tempered water according to an automatic control as well as according to a manual control. However, these systems face several issues.

An issue with dual faucets is that the liquid systems will mix if both are activated simultaneously. For example, if a user manually turns on the faucet to get a glass of water and if the user inadvertently passes too close to the sensor, this activates the automatic system and dispenses warm water into the cold drinking water. This problem is lessened today by setting the sensor of the automatic water system to be considerably less sensitive which makes the overall system less useful.

Therefore, there is a need for a better dual faucet.

### SUMMARY OF THE INVENTION

It is the aim of the current invention to alleviate at least some of the above-mentioned problems. This is achieved by a valve for household and/or sanitary water use for providing water according to two different user controls, the valve having: a valve chamber with a first opening, an override opening, and a valve outlet opening, a valve insert being movable between a relaxed position and an override position in said valve chamber, where, in the relaxed position, the valve piston engages with said valve chamber to form a primary liquid pathway between said first opening and said valve outlet opening, and in said override position, the valve piston engages with said valve chamber to form an override liquid pathway between said override opening and said valve outlet opening while blocking said primary liquid pathway, wherein said valve piston is adapted to be movable from said relaxed position to said override position by pressurised liquid flowing through said override opening.

Thereby, an efficient and effective water control unit is achieved where a user can easily achieve the desired water flows. Thereby, a more user friendly valve is achieved that allows better faucet flow control.

In an embodiment, the valve insert is maintained in the relaxed position by a first force exerted by spring means where pressurised water having entered through the override opening into said override valve exerts a second force onto said valve piston, where said spring means exerts a first force being smaller than said second force, whereby the valve insert is adapted to be moved into the override position by a water flow along said override liquid pathway.

Thereby, the override valve does not rely on gravity to function as well as having a more precise return travel time from the override state to the primary state. Furthermore, the override valve may then be installed in various orientations. The spring means is adapted to be dominated by the expected water pressures of the water system.

In an embodiment, the valve insert is a valve piston adapted to be translatable in said valve chamber between the relaxed position and the override position. Thereby, a simple construction is achieved.

The valve insert is adapted to move inside the valve chamber and form, in cooperation with the valve chamber, one of two different flow paths depending on which position the valve insert is currently in. Furthermore, the valve insert and valve chamber have geometries that allow the forces of a pressurised liquid in the override liquid pathway to push the valve insert from the relaxed position to the override position.

The movement between relaxed and override positions can be any type that is convenient, such as translation and/or rotation, and the valve may thus be constructed in any convenient manner.

In an embodiment, while in the relaxed position, the valve insert engages with the valve chamber to block said override liquid pathway. Water flowing through the override liquid pathway overcomes the blocking of the override liquid pathway by moving the insert out of the relaxed position. While it is in the relaxed position, backflow into the override liquid pathway is blocked by the valve piston.

In an embodiment, the valve insert is a valve piston adapted to be translatable in said valve chamber between the relaxed position and the override position. When the movement of the valve insert is a translational movement, the valve insert is a valve piston and will be described as such in the current disclosure. Using a valve piston may be especially useful since pressurised liquids exert outwards-facing forces on their containers. This outwards-directed force is then harnessed to lift the valve piston against gravity and/or work against a spring. In either case, no force conversions to rotation or change of direction are necessary.

However even so, when valve pistons are described for the invention, it should be understood to only be a preferable embodiment, while valve inserts adapted to rotate or utilise a combination movement of translation and rotation are also possible.

When the valve piston is in the relaxed position, the override valve is said to be in a primary state, while when the valve piston is in the override position, the override valve is said to be in an override state.

In an embodiment of the invention having a valve piston, the valve piston is translatable in a first direction, the valve piston having: an inner piston channel extending in the first direction from a closed bottom end to an open top end, a piston inlet extending through the lateral sidewall to the inner piston channel near said closed bottom end, and a piston flange at said open top end. Furthermore, the valve chamber has a top section with a shoulder forming a flange seat conforming to said piston flange to substantially produce a seal, a middle section with a lateral channel bringing said override opening into fluid communication with the underside of said piston flange, and a bottom section with a lateral seal sealing against said valve piston to block fluid communication to pass between said lateral seal and said valve piston. In the relaxed position of the override valve, the piston flange rests against the flange seat and the piston inlet is located below said lateral seal to allow fluid communication from said primary opening to the inner piston channel. In the override position, the piston flange is raised from the flange seat and the piston inlet is drawn up above said lateral seal in order to block lateral access hereto from below.

Thereby, a specific type of override valve is provided that allows a water flow provided into the override valve through the override opening to block off a primary water flow, further using the primary water flow to maintain the override state.

This achieves a multitude of beneficial effects, such as a cheap and effective dual faucet that works mechanically without relying on electrical signals. This benefit is further achieved by other embodiments of the invention.

In an embodiment, the valve chamber and valve insert are constructed to ensure that water entering the override valve through the primary opening, when the valve insert is in the override position, exert a force on said valve insert to retain it in said override position. Thereby, even if the water pressure through the override opening is reduced during use, while there is a risk of mixing, the override valve maintains the blocking of water from the primary opening. This ensures that water is not inadvertently mixed, and furthermore it opens up a wider range of override water flows to the user, even when water from the primary opening is exerting pressure in the override valve. Even with a substantial water pressure along the primary liquid pathway, this liquid cannot force itself through the valve but rather maintains the override liquid flow, ensuring that even a small override flow maintains the override valve in the override position.

In other words, when the user manipulates a secondary dispensing valve controlling the override liquid pathway, they are afforded at least significantly its whole operating space without having to necessarily maintain a high flow in fear that the override valve should otherwise drop to the primary state. In this embodiment, the valve insert returns to the primary state no sooner than when the water flow from both the primary opening and the override opening falls below given thresholds.

In an embodiment, the invention relates to a dual faucet for providing two separate user controlled water sources, the dual faucet comprising the override valve as described. A first user controlled water source is provided along the primary liquid pathway while a second, different user controlled water source is provided along said override liquid pathway. Thereby, an easy to use and install faucet is provided that allows easy flow adjustment and/or easy dispensing of two different water products through a single faucet outlet, while preventing cross-flow between the two water lines / water sources.

In an embodiment, the invention relates to a dual faucet providing water according to two different user controls, the dual faucet comprising the override valve as described, the dual faucet further comprising a common outlet channel with an outlet opening for outputting said water to a user, a user controlled primary dispensing valve controlling a water flow to said first opening, and a user controlled secondary dispensing valve controlling a water flow to said override opening.

Thereby, a dual faucet with an override valve is provided that allows a water flow provided into the override valve through the override opening to block off a primary water flow without mixing the two water flows. This achieves a multitude of beneficial effects, such as a cheap and effective dual faucet, as well as a reliable dual faucet.

In the broadest terms, the faucet is a household-style water dispensing unit. It can be a sink faucet, a shower faucet, or any such device. By being a dual faucet it is specifically a type of faucet adapted to provide two different kinds of water or water according to two discrete control mechanisms.

In an embodiment, the dual faucet is a sink dual faucet. In another embodiment, the dual faucet is a shower dual faucet.

In the sense of the present disclosure, a dispensing valve provides water flow control. It may allow a continuum of flowrates or it may provide an open and a closed state. An example of a dispensing valve is a magnetic valve connected to a motion sensor.

In the sense of the present disclosure, a mixing valve is a valve controlling the mixing ratio of two input liquids before dispensing it through an outlet. A mixing valve can simply be a chamber following two individual dispensing valves, each connected to their own water line / water hose, where the relative openness of the dispensing valves makes the chamber into a mixing valve.

In the present disclosure, liquid pathways and water lines are used interchangeably to denote the channels leading to the override valve primary and override openings.

Many types of valves are combination valves being both dispensing valves and mixing valves, such as ceramic cartridges and ball-valves.

A dual faucet is a type of faucet that has at least two discrete dispensing valves to control water flow in each their own individual water lines, these two water line valves being protected against crossflow from one another. Each of these water lines may then have more than the mentioned one dispensing valve, such as mixing valves,additional dispensing valves, and combination valves.

In an embodiment, the dual faucet is a dual mixer faucet comprising at least one mixing valve having two liquid inlets, where one of said liquid pathways passes through said mixing valve for mixing two liquids according to user control, thereby providing tempered water along at least one of said liquid pathways. Thereby, improved usefulness is achieved since at least one of the liquid pathways is adapted to provide tempered or otherwise mixed water to a user. For some use cases, using one mixer valve is enough for optimum use, such as when one of the liquid pathways simply provides cold water or a luxury water product (described in more detail below).

A faucet is then provided with at least one mixing valve to at least control the water temperature of one water line. Advantageously, one of the water lines may thus be controlled by a combination valve, such as a ceramic cartridge, while the other water line is controlled by a dispensing valve such as a magnetic valve and/or a ceramic cartridge.

In an embodiment, the dual mixer faucet comprises two mixing valves for dispensing mixed water to the first water line and second water line, respectively. This may take the shape of a combination valve for each of the two water lines, a mixing valve and a dispensing valve for each of the two water lines, or a combination valve for one water line and separate dispensing and mixing valves for the other water line. Thereby, even further user friendliness is achieved.

The water lines may deliver a series of different water products. One example is that the primary water line is a fixed-temperature tempered water for handwashing and/or dishwashing, while the override water line provides water of a user-controllable temperature. Another example is that both water lines provide user-controllable temperature water, where the temperatures then can be set individually of each other. Another example is that the primary water line provides water of a user-controllable temperature, while the override water line provides a luxury water product. Luxury water products are water products like carbonated water, filtered water, softened water, and other types of chemically and/or mechanically treated water. Yet another example is that the primary water line provides a pre-tempered water while the override water line provides a luxury water product.

One example of a dual faucet according to the invention has an override valve as described with a further third inlet opening for providing water to join either the primary water line or the override water line. This third inlet opening is fluidly preceded by dispensing valve. By providing a third inlet opening with a dispensing valve, a conventional dual-knob mixer faucet water line is provided. A fourth inlet opening may further be provided to provide a dual-knob to both water lines.

In an embodiment, the primary dispensing valve is a sensor-controlled valve and the second valve is a manually controlled valve. Thereby, a user may quickly use the dual mixer faucet to wash hands or clean something dirty without touching the faucet by moving a hand into a sensor field in front of the faucet. When the user then wishes to take a cold glass of water, they turn on the second valve which activates the override valve to block off the primary water-line and instead allows water from the override water-line to be passed through to the outlet and the user. The sensor that controls the valve can be an infrared sensor, a motion sensor, a capacitive sensor or button.

A simple version can be imagined where the manually controlled combination valve is a ceramic cartridge and the sensor-controlled dispensing valve is a magnetic valve and a motion sensor. Thereby, the dual valve can serve two purposes quickly, sanitarily and with high fidelity, i.e., switching between the water lines is easy.

The override valve can be constructed in several ways. In principle, the override valve is a combining Y-junction where even a relatively low flow through the override opening overrides and blocks off water flow into the junction through the primary opening to prevent mixing and allow one water flow to dominate the other, no matter what current flow is being moved through the primary opening.

When a water flow from said override opening is sufficiently low, the force exerted by the flow therefrom falls below a given threshold to allow the valve piston to return to the relaxed position. Then, water is again allowed to flow from the primary opening to pass through the override valve and out of the faucet.

The time that passes from the override flow is shut off to a time when the valve is returned to the primary state can be controlled by constructional details of the override valve. The travel distance of the valve piston and the spacing between the valve piston and the valve chamber at the place where the override water flow exerts its force on the valve piston plays an important role in controlling return travel time.

In an embodiment of the mixer faucet, a mixer valve is a ceramic cartridge. In an embodiment of the mixer faucet, the secondary dispensing valve is a ceramic cartridge. Thereby a more durable and user friendly hydraulic system is provided.

### SHORT LIST OF THE DRAWINGS

In the following, example embodiments are described according to the invention, where:
Fig. 1 is a side view of a dual faucet according to the invention,
Figs. 2A and 2B are conceptual drawings of the water lines of a dual faucet 100 according to the invention,
Fig. 3 is a conceptual cross-section of a dual faucet according to the invention,
Fig. 4A is a cross-sectional view of an override valve of a dual faucet according to the invention in a relaxed state,
Fig. 4B is a cross-sectional view of an override valve of a dual faucet according to the invention in an override state, and
Fig. 5 is an axiomatic view of the override valve.

### DETAILED DESCRIPTION OF DRAWINGS

In the following, the invention is described in detail through embodiments hereof that should not be thought of as limiting to the scope of the invention.

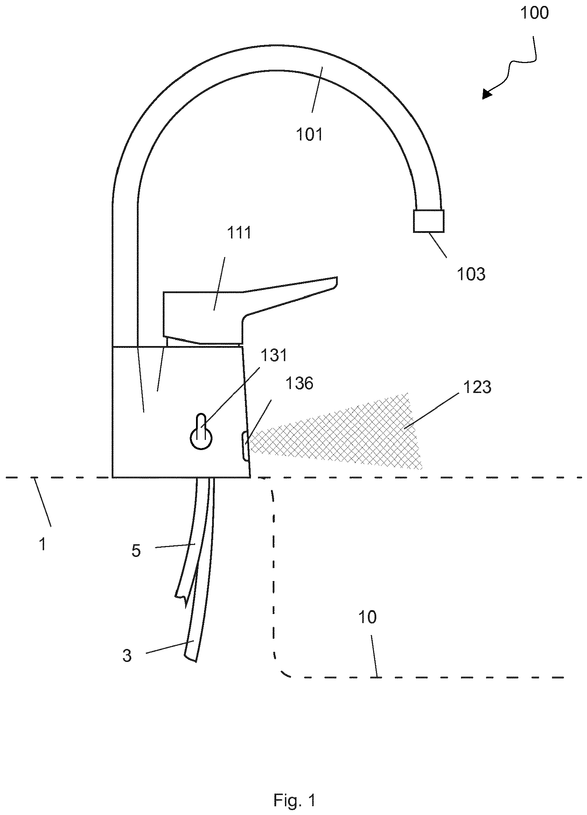

Fig. 1 is a side view of a dual faucet 100 according to the invention. For applications where it is desirable to satisfy different water dispensing and cleaning needs using a single faucet, a dual faucet 100 may advantageously be installed. For example, the features of a sensor faucet may be combined with the features of a manual faucet to facilitate more clean use of faucets and less water wastage by children washing hands, while still allowing parents the fidelity and dispensing control they rely on for a smooth kitchen/bathroom operation.

In the depicted embodiment, a hot water hose 3 and a cold water hose 5 provide unmixed water to each of the two water lines that are then mixed in the faucet.

In a preferable embodiment as shown, the dual faucet 100 has two internal water lines. The first of these uses a sensor 136 for detecting user motion in a sensor field 123 and a primary handle 131 for controlling the water temperature of the sensor-driven water line. When a user moves a hand into the sensor field 123, a magnetic valve opens and water is dispensed according to the adjustment of the primary handle 131.

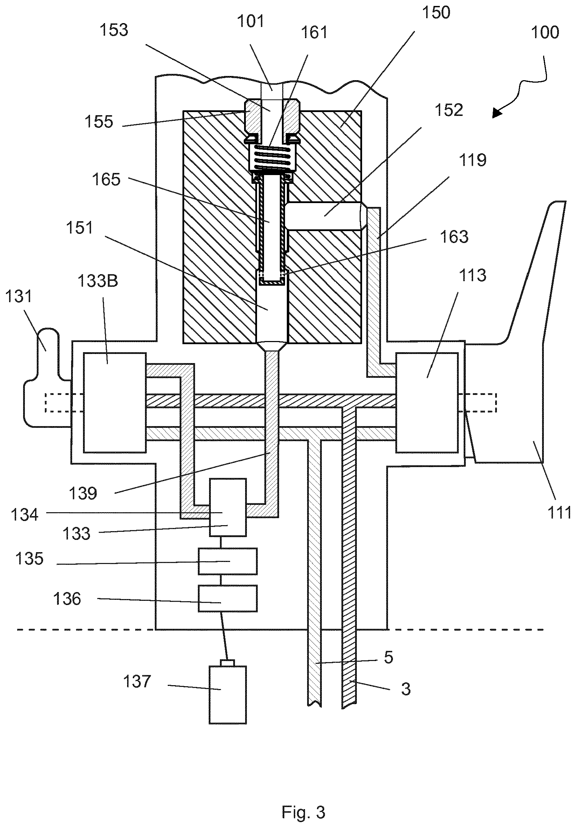

When desired, a user may manipulate an override handle 111 to dispense water. This override handle 111 may conveniently be formed as a conventional manual handle and may be thought of as such. Turning on the water using this override handle 111 blocks water transport through the sensor-controlled primary water line. This prevents crossflow between the two water lines. The sensor-driven water line and the override water line alternate in moving water to an outlet channel 101 and eventually out of a faucet outlet according to their respective controllers, but not at the same time. This will be discussed and shown in further detail in relation to Figs. 3-6.

Thereby, a dual faucet 100 is provided and it can be used with an automatic, sensor-based water line and a manual water line while substantially avoiding mixing water from the water lines, that further allows prompt water delivery from either water line. This ensures maximal control while being intuitive to use.

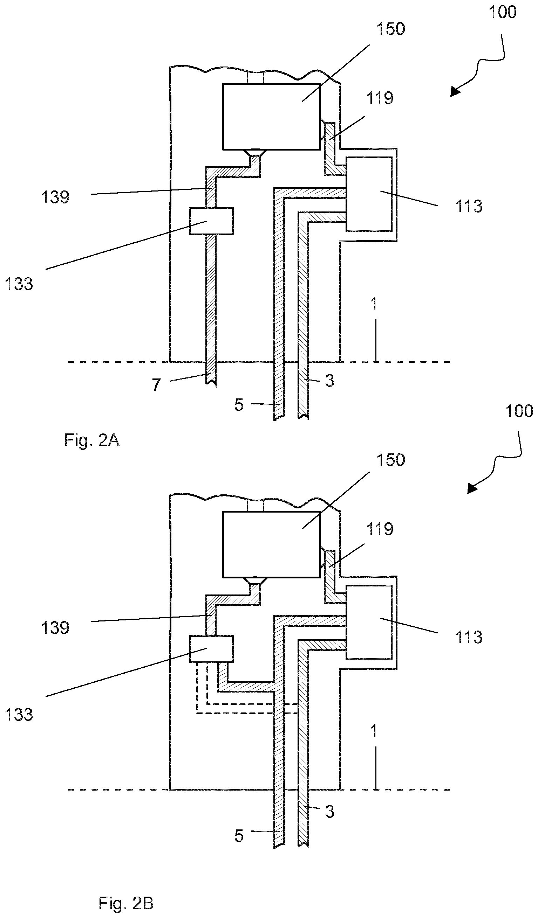

Figs. 2A and 2B are conceptual drawings of the water lines of a dual faucet 100 according to the invention.

In Fig. 2A, a primary dispensing valve 133 is fed with pre-mixed water from a mixed inlet hose 7. This may for example be convenient if a mixing tank is located immediately below the faucet. This can be practical if a temperature can be determined ahead of time that is advantageous for a given task. The primary dispensing valve 133 may be any type of control unit that can at least control water flowrate, such as a sensor-controlled electronic valve, a ceramic cartridge, a ball-valve or other convenient type of control unit.

A secondary dispensing valve 113 is providing hot and cold water from a hot inlet hose 3 and a cold inlet hose 5 respectively, and is adapted to mix the water according to an adjustment. Preferably, this is a ceramic cartridge, but may also be any other type of control unit adapted for controlling at least the water flowrate, such as a ball-type control unit. The secondary dispensing valve preferably also allows adjusting a mixing ratio.

The dual faucet 100 then has two internal water lines that can feed water to the outlet channel - a primary water line 139 and an override water line 119. The two water lines may be turned off or turned on without regard to one another. The two water lines 119, 139 meet in the override valve 150. When water passes into the override valve from the override water line 119, this flow of water blocks the primary water line 139, and at least substantially no mixing occurs even if both control units 113, 133 are adjusted to allow water to pass through.

Fig. 2B illustrates water lines of a dual faucet 100 according to the invention being identical to the dual faucet 100 of Fig. 2A except as described here. The primary dispensing valve 133 may be provided with water from one or both of the hot inlet hose 3 and the cold inlet hose 5, instead of receiving premixed water from a premixed inlet hose.

This allows both water lines to be provided with water from only two inlet hoses and thus provides a simpler and possibly cheaper installation.

The skilled person will realise that a wide variety of arrangements of water lines and dispensing valves are possible. One example would be that both water lines may be provided a premixed water respectively that are different from one another. Another example arrangement is where the primary water line is provided with water from the hot and cold inlet hoses while it is the override water line that is provided with pre-mixed water. If the dual faucet has a sensor-controlled water line, this may be either of the primary and the override water lines. Both of the water lines may be sensor-controlled by different sensor types or locations. In short, the skilled person will realise that a multitude of possible arrangements of water lines and control units are possible that fall within the scope of the invention, as long as an override valve is provided with two different water delivery sub-systems.

Fig. 3 is a conceptual cross-section of a dual faucet 100 according to a preferable embodiment of the invention. The dual faucet 200 of Fig. 3 interfaces with a hot inlet hose 3 and a cold inlet hose 5. These are both split and shared between a primary mixing valve 133B and a secondary dispensing valve 113. The primary mixing valve 133B is adapted to control the mixing ratio of hot and cold water to a primary water line 139 by manipulating the rotational position of a primary handle. The flowrate is then controlled between being either opened and closed by a sensor-controlled primary dispensing valve 133 taking the form of a magnetic valve 134. The magnetic valve 134 and sensor 136 are powered by a battery 137 and controlled by a processor 135. When the sensor 136 is activated, water is fed along the primary water line 139, through the primary dispensing valve 133 / magnetic valve 134 and to the override valve 150. The water flows into the override valve 150 through a first valve opening, into a piston, and up through the piston. The primary-line water then flows out of the piston, through an upper part of a valve chamber 154, through a valve plug and out of the override valve 150. The water then flows into the outlet channel 101 and from there to the faucet outlet (not shown).

The secondary dispensing valve 113 is a ceramic cartridge which a user can control by using the override handle 111. Each of the primary mixing valve 133B and the secondary dispensing valve 113 is then adjusted to a desired mixing ratio independently of one another. The secondary dispensing valve 113 also provides flowrate adjustment.

When a user opens the secondary dispensing valve 113 by manipulating the override handle 111, water flows through the override channel 119 and into the override valve 150 through a second valve opening 152. A spring means 161 retains the piston 160 in its relaxed position and is adapted to be less powerful than the water pressure of the override water line, which pushes against a piston flange 162 to move the valve piston 160 upwards, allowing the water from the override water line 119 to move through the override valve 150 and into the outlet channel 101 and from there to the faucet outlet (not shown). Instead of a valve piston, the override valve may in other embodiments simply have a valve insert adapted to rotate or provide a combination movement of rotation and translation to move between the relaxed position X and the override position Y.

The flowrates of the two water lines are controlled for the primary water line 139 by a sensor 136 and a magnetic valve 134 and for the override water line 119 by an override handle 111. A user may then activate the sensor 136 to open the magnetic valve 134, and water will be provided by the dual faucet 100.

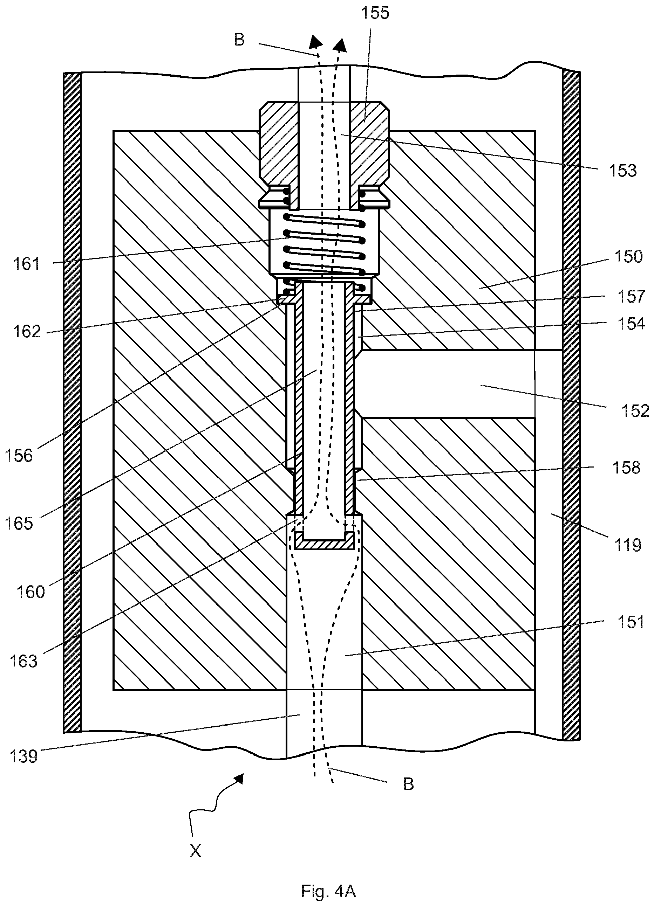

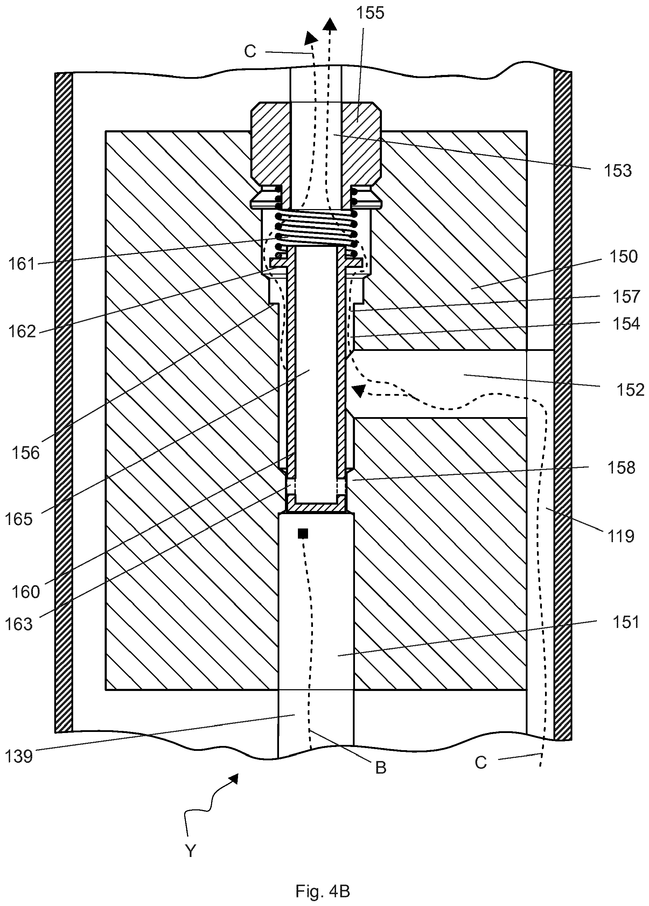

Figs. 4A and 4B are cross-sectional views of an override valve of a dual faucet according to the invention in a relaxed state and an override state respectively. The override valve will be described in further detail in the following.

Fig. 4A depicts a zoomed-in view of the override valve 150 in the relaxed state, as previously shown in Fig. 3. The override valve 150 has a body and a valve chamber 154 formed therein, as well as a first opening 151, a second opening 152 and an outlet opening 153 being a third opening. The override valve further comprises a valve piston 160 being hollow and having a peripheral piston flange 162. The valve piston 160 has at least one piston inlet 163 through its lateral sidewall extending into its hollow inside. The piston flange 162 rests against the flange seat 156 portion of the valve chamber. The piston is maintained in its relaxed position X by a spring means 161 and may be assisted by gravity as well, depending on orientation of the override valve 150. The spring means 161 is maintained in the override valve 150 by a valve plug 155 that conveniently engages to form the valve chamber 154 through a thread as well as the outlet opening 153.

In the relaxed position X, the piston inlet 163 brings the inner piston channel 165 in fluid communication with the first valve opening 151. Water is then allowed to travel from the primary water line 139 through the primary fluid pathway B through the override valve from the first valve opening 151 and out of the valve outlet opening 153.

The valve chamber 154 sidewalls engage flush around the periphery of the piston near the bottom of the valve piston but above the piston inlet when the override valve is in the relaxed state. Washers can conveniently be placed in recesses in the flange and/or valve chamber surface (not shown).

In Fig 4A, there is substantially no water pressure on the valve piston 160 through the second valve opening 152. Because of the spring means 161 and/or gravity, the piston is maintained in the relaxed position X.

In Fig 4B, the secondary dispensing valve has been adjusted to allow a water flow into the override valve 150 through the second valve opening 152. The water from the override water line then fills the valve chamber 154 around the valve piston 160. When it has been filled, the water pressure of the water in the valve chamber pushes against the surfaces of the valve chamber 154, including the piston flange 162. The water pressure lifts the valve piston 160 from the relaxed position X and eventually flows around the piston flange 162 while maintaining it lifted as long as the water pressure of the override fluid pathway C is sufficiently high; or in other words, as long as the secondary dispensing valve 113 is adjusted to allow water to flow into the override valve 150 through the second valve opening 152. The water pressure and flow have then moved the valve piston to the override position Y.

Furthermore, when the water pressure drops, the valve piston 160 drops as well at a speed according to the constructional details of the override valve 150. For example, the valve piston 160 travel distance and the piston seat 156 height help determine the time it takes for the valve piston 160 to fully return to the relaxed state. This return time determines how quickly a user can switch the override piston between the positions X and Y and thereby how quickly they can switch between the liquid pathways B and C of the override valve 160.

As can be seen in the figure, when the valve piston 160 is raised to allow water from the override water line 119 to pass through the override valve 150, the piston inlet 163 is drawn past a lateral seal 157 of the override valve 150, essentially cutting any liquid transport from the primary water line through the override valve 150.

The constructional details of the shown embodiment further ensures that not only is the primary water flow stopped before it enters the piston in the override state, but the pressure exerted by the water of the primary water line is used to help maintain the override state of the override valve 150 once this is achieved, even if the pressure of the override water line is low. This is done by pushing against the bottom of the piston. This further ensures that no mixing of the waters of the two water lines takes place, even when the override water flow tapers off. Also, even a relatively low pressure of the override water line will activate the override state since the water pressure of the override water line does not need to compete with, or overpower the pressure of the primary water line, but only the spring means 162 as well as any overcutting force of the primary water line.

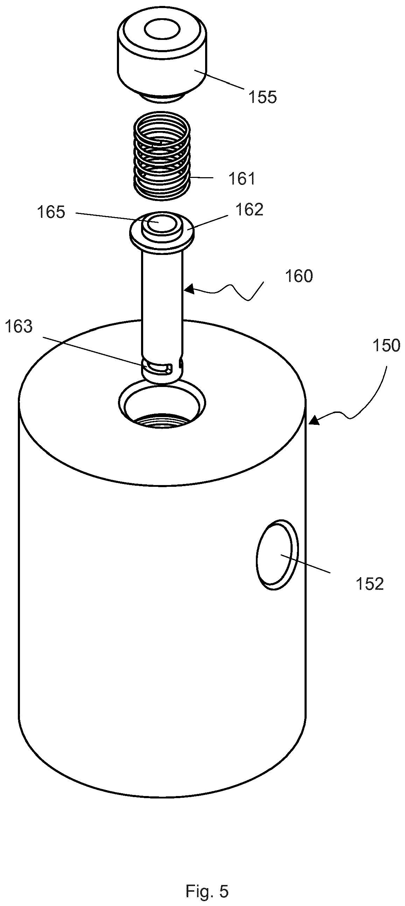

Fig. 5 is an axiomatic exploded view of the override valve. As can be seen, assembly of the override valve 150 can be quite easy. The hollow valve 160 piston with its piston inlet 163, inner piston channel 165 and piston flange 162 is inserted through a top opening, followed by the spring means 161 and finally concluded with the valve plug 155. Inserting the override valve 150 into existing dual faucets is then easy as it is fitting into new designs in a non-obtrusive manner. The dimensions of the override valve 150 can be rather small and fit within existing footprints that users have come to expect.

## Claims

1. A valve (150) suitable for household use for providing water according to two different user controls, the valve (150) having:
- a valve chamber (154) with a first opening (151), an override opening (152), and a valve outlet opening (153),
- a valve insert being movable between a relaxed position (X) and an override position (Y) in said valve chamber (154), where
- in said relaxed position (X), the valve insert engages with said valve chamber (154) to form a primary liquid pathway (B) between said first opening (151) and said valve outlet opening (153), and
- in said override position (Y), the valve insert engages with said valve chamber (154) to form an override liquid pathway (C) between said override opening (152) and said valve outlet opening (153) while blocking said primary liquid pathway (B), wherein
- said valve piston (160) is adapted to be movable from said relaxed position (X) to said override position (Y) by pressurised liquid flowing through said override opening (152).

2. A valve (150) according to claim 1, wherein the valve insert is maintained in the relaxed position (X) by a first force exerted by spring means (161), where pressurised water having entered through the override opening (152) into said override valve (150) exerts a second force onto said valve piston, where said spring means exerts a first force being smaller than said second force, whereby the valve insert is adapted to be moved into the override position (Y) by a water flow along said override liquid pathway (C).

3. A valve (150) according to any of claims 1-2, wherein the valve insert is a valve piston (160) adapted to be translatable in said valve chamber between the relaxed position (X) and the override position (Y).

4. A valve (150) according to claim 3, wherein the valve piston (160) is translatable in a first direction, the valve piston having:
- an inner piston channel (165) extending in the first direction from a closed bottom end to an open top end,
- a piston inlet (163) extending through the lateral sidewall to the inner piston channel (165) near said closed bottom end,
- a piston flange (162) at said open top end,
- the valve chamber (154) having:
- a top section with a shoulder forming a flange seat (156) conforming to said piston flange (162) to substantially produce a seal,
- a middle section with a lateral channel (157) bringing said override opening (151) into fluid communication with the underside of said piston flange (162),
- a bottom section with a lateral seal (158) sealing against said valve piston (160) to block fluid communication to pass between said lateral seal and said valve piston (160), the primary opening fluidly connected to provide water from below said lateral seal, where
- in said relaxed position (X),, the piston flange of said valve piston rests against the flange seat of said valve chamber and the piston inlet is located below said lateral seal, and
- in said override position (Y), the piston flange is raised from said flange seat and said piston inlet is located next to or above said lateral seal.

5. A valve (150) according to any of claims 1-4, wherein the valve chamber (154) and valve insert are constructed to ensure that water entering the override valve (150) through the primary opening (151), when the valve insert is in the override position (Y), exerts a force on said valve insert to retain it in said override position (Y).

6. A dual faucet (200) for providing two user controlled water sources, the dual faucet comprising an override valve according to any of claims 1-5, where a first user controlled water source is provided along the primary liquid pathway (B) while a second, different user controlled water source is provided along said override liquid pathway (C).

7. A dual faucet (200) according to claim 6, further comprising:
- a common outlet channel (101) with an outlet opening (103) for outputting said water to a user,
- a user controlled primary dispensing valve (133) controlling a water flow to said first opening (151),
- a user controlled secondary dispensing valve (113) controlling a water flow to said override opening (152).

8. A dual faucet (200) according to any of claims 6-7 being a dual mixer faucet by further comprising at least one mixing valve having two liquid inlets, where one of said liquid pathways (B, C) passes through said mixing valve for mixing two liquids according to user control, thereby providing tempered water along at least one of said liquid pathways.

9. A dual faucet (200) according to claims 6-8 being a dual mixer faucet, the dual mixer faucet comprising a mixing valve (133B) inline of said primary liquid pathway (B) and a mixing valve (113) inline of said override liquid pathway (C).

10. A dual faucet (200) according to any of claims 6-9, wherein the primary dispensing valve (133) is a sensor-controlled valve and the secondary dispensing valve (113) is a manually controlled valve.

11. A dual faucet (200) according to any of claims 6-10, wherein the secondary dispensing valve (113) is a ceramic cartridge.
